# EUROPEAN PATENT APPLICATION

(11) **EP 2 918 522 A1**
(43) Date of publication of application: **16.09.2015**
(21) Application number: 15158757.3
(22) Date of filing: 12.03.2015
(51) Int. Cl.: B65G 25/04, B65G 27/34, B65G 43/10

(54) **METHOD AND ARRANGEMENT FOR FEEDING MATERIAL TO BE CRUSHED INTO CRUSHER**

(30) Priority: 12.03.2014 FI 20145226
(71) Applicant: BMH Technology Oy, 26100 Rauma (FI)
(72) Inventor: Nurmi, Jarkko, 26100 Rauma (FI); Niemi, Tapio, 26100 Rauma (FI); Hämäläinen, Mikko, 26100 Rauma (FI)
(74) Representative: Kolster Oy Ab

(57) **Abstract**

The invention relates to a method for feeding material to be crushed (B) by a step feeder into a crusher (3) and involves arranging one immediately after the other two step feeders (1, 2) placed at substantially the same height level or substantially close to the same height level, the use and speed of the feeders being controlled independently in each case. The invention also relates to a system for implementing the method. The height of the material is measured and the speed of the feeders is adjusted accordingly.

## Description

### Background of the invention

The invention relates to a method and arrangement for feeding material to be crushed into a crusher by a step feeder. A common solution in truck delivery-crusher combinations is to fill the step feeder by a bucket loader or a grab feeder.

With regard to material flow balancing systems, solutions employing different belt arrangements to balance the flow are known in the art. Examples of these have been disclosed e.g. in patent publications EP 2246673, US 6848568, DE 2804585, US 5171498, GB 1237284, FR 2571137 and US 3630414.

A problem with the arrangements disclosed in the above publications is that the structures are complicated because both the belt to be driven and the conveyor frame have to be moved.

### Summary of the invention

An object of the invention is thus to provide a method and an arrangement that enable the aforementioned problems to be solved. This is achieved by a method of the invention which is mainly characterized by arranging one immediately after the other two step feeders placed at substantially the same height level or close to substantially the same height level, the use and speed of the feeders being controlled independently in each case; and by a system which is mainly characterized in that it comprises two step feeders placed one immediately after the other at substantially the same height level or close to substantially the same height level, the feeders and the crusher being provided with means for controlling their use independently in each case.

The solution of the invention makes use of the difference in speed between the step feeders and the ability of the first step feeder to push and slide material across a cross-over point between the step feeders to the second step feeder.

Preferably, the levels of the material in both the step feeders and the crusher are measured and the use of the step feeders and the crusher as well as their speed is controlled on the basis of these level data.

The solution according to the invention is significantly simpler than any previously used material feed system. It also makes it possible to safely stop the first feed conveyor, to drive a truck on top of it or to step out of the truck to open the rear doors thereof, and, at the same time, to provide uninterrupted feed to the next device in the process with the conveyor system.

Preferred embodiments of the invention are disclosed in the dependent claims.

### List of figures

The invention will now be described in greater detail by means of a preferred embodiment, with reference to the accompanying drawings, in which:

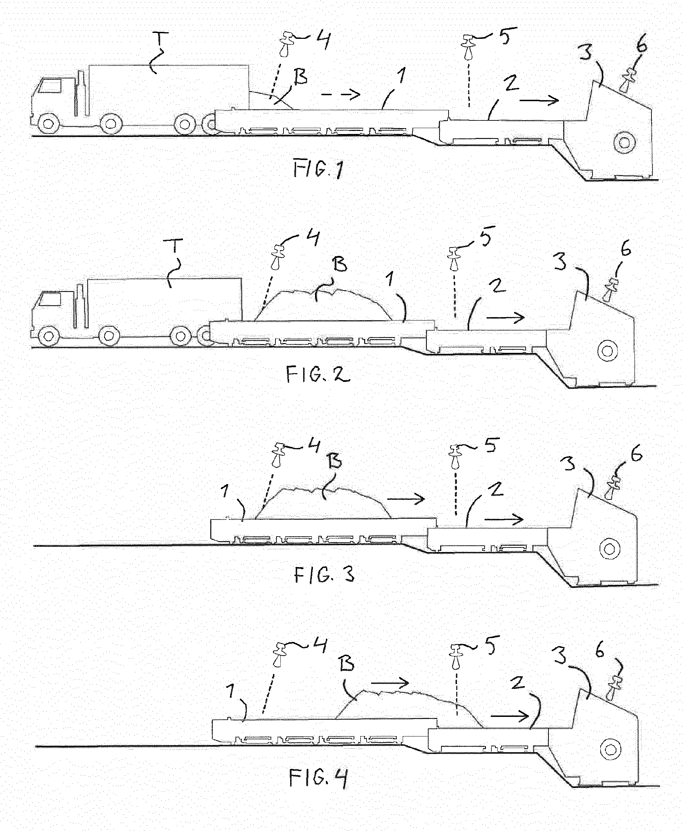

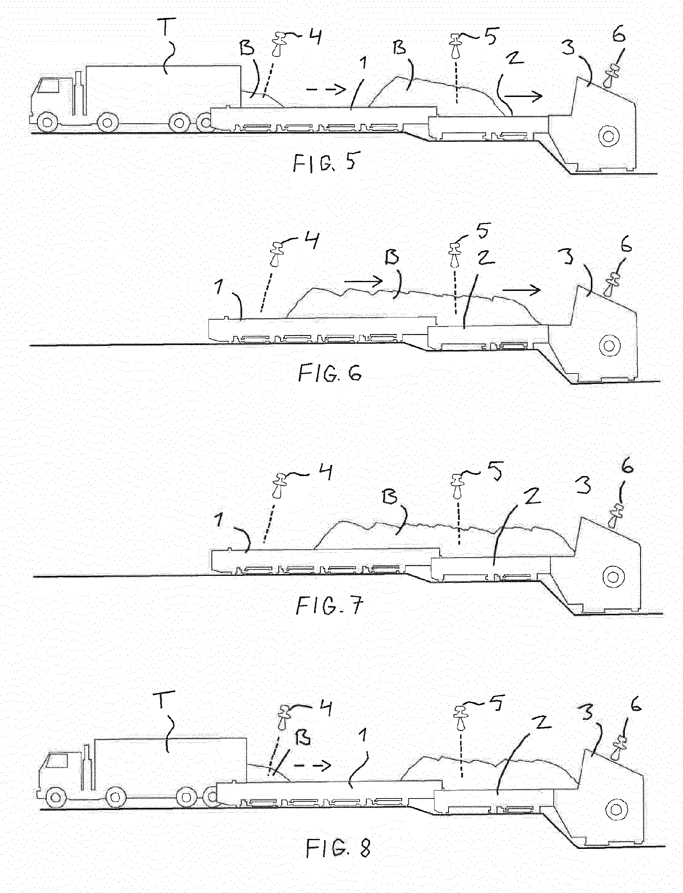

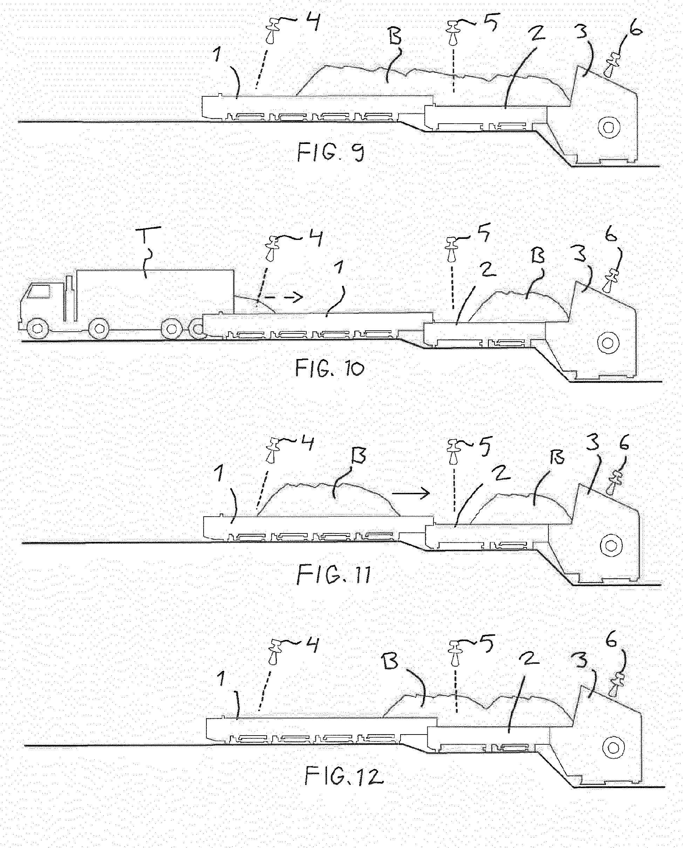

Figures 1 to 12 illustrate how a step feeder system of the invention is controlled when material to be crushed is delivered in a truck to feed it into a crusher.

### Detailed description of the invention

Reference is made to the drawings that show a step feeder arrangement of the invention, comprising a first step feeder, i.e. a discharge feeder 1, and a second step feeder, i.e. a crusher feeder 2, arranged immediately thereafter. The feeders 1 and 2 are arranged at substantially the same height level or substantially close to the same height level, which in the disclosed example means that the crusher feeder 2 is slightly lower down than the discharge feeder 1 to allow material to be crushed B that is delivered from the discharge feeder 1 to smoothly move on the crusher feeder 2, without an essential drop. The use and speed of both the crushers 1 and 2 is controlled independently in each case. The feed rate of the discharge feeder 1 may be selected preferably to be 2 to 3 time faster than that of the crusher feeder 1.

Immediately after the crusher feeder 2 there is the actual crusher 3 to which the crusher feeder 2 feeds material to be crushed. Although the crusher 3 is used and controlled also independently, its operation naturally depends on the feeders 1 and 2 and the amount of the material to be crushed B.

At the forward end of each feeder 1 and 2, i.e. at the reception end of the material to be crushed B, there are respective level measurement devices 4 and 5, and, correspondingly, there is a level measurement device 6 in the crusher. The level data provided by the devices may be used for controlling the use and speed of the feeders 1 and 2 and the crusher 3. The measurement devices 4 to 6 may be cameras or laser scanners, for example.

A truck delivering material to be crushed B to the discharge feeder 1 is marked with reference T.

In the following, a series of events shown in Figures 1 to 12 is disclosed:

In Figure 1 a truck T is discharging a load, i.e. material to be crushed B. The discharge feeder 1 is running controlled by its level measurement (device 4). The crusher 3 is empty, so the crusher feeder 2 is running all the time.

In Figure 2 the car T has finished discharging the load. The discharge feeder 1 waits for the car T to leave. The crusher 3 is empty, so the crusher feeder 2 is running all the time.

In Figure 3 the car T has left. The discharge feeder 1 is running. The crusher 3 is empty, so the crusher feeder 2 is running all the time.

In Figure 4 the discharge feeder 1 is running and pushing material B to the crusher feeder 2. The level measurement (device 5) of the crusher feeder 2 shows that there is material B on the crusher feeder 2, but the device 5 does not stop anything because there is space on the crusher feeder 2. The crusher 3 is empty, so the crusher feeder 2 is running all the time.

In Figure 5 automation (device 4) observes that there is space on the discharge feeder 1 and accepts a new truck T for discharge. The discharge feeder 1 is running controlled by its level measurement. The level measurement (device 5) of the crusher feeder 2 shows that there is material B on the crusher feeder 2, but the device 5 does not stop anything because there is space on the crusher feeder 2. The crusher 3 is empty, so the crusher feeder 2 is running all the time.

In Figure 6 the truck T has discharged its load and left. The discharge feeder 1 is running and feeds the new material so that it comes into contact with the material already on the crusher feeder 2. When the automation detects that there is no space on the feeders 1 and 2, the discharge feeder 1 starts to follow the movement of the crusher feeder 2. The crusher 3 is empty, so the crusher feeder 2 is running all the time.

In Figure 7 there is material B in the crusher 3. The discharge feeder 2 is running controlled by its level measurement (device 6). The discharge feeder 1 follows the movement of the crusher feeder 2. There is not yet space on the crusher feeder 1 for a new truck and its load.

In Figure 8 there is space on the discharge feeder 1. A new truck T is received for discharge. The discharge feeder 1 is running controlled by its level measurement (device 4). The tail of the previous load is at the end of the discharge feeder 1, but there is so little of it that it is assumed to slide on the discharge feeder 1 and not to push the material pile into the crusher 3. There is material in the crusher 3. The crusher feeder 2 follows the level measurement (device 6) of the crusher 3.

In Figure 9 the discharge feeder 1 has pushed the new load so that it comes into contact with the previous load and has started to follow the crusher feeder 2. There is material in the crusher 3. The crusher feeder 2 follows the level measurement (device 6) of the crusher 3.

In Figure 10 a truck T is discharging a load. In Figure 2 there is material B in the crusher 3.

In Figure 11 the truck T has left. The discharge feeder 1 drives the load to the crusher feeder 2. There is material B in the crusher feeder 2 and the crusher 3.

In Figure 12 the discharge feeder 1 has pushed the load so that it is in contact with the material on the crusher feeder 2. At the same time the crusher feeder 2 has been at a halt because there is material B in the crusher 3. Also the discharge feeder 1 is at a halt. When the level of material B in the crusher 3 drops, the crusher feeder 2 is able to push a few times. As space becomes available at the forward end of the crusher feeder 2, the discharge feeder 1 pushes to the crusher feeder 2 the end part of the load it carries. Now a new truck T may be received for discharge.

With the level measurement devices 4 and 5 the material pile accumulating on the feeders 1 and 2 is kept uniform. The measurement is also used for profiling the advancing of the pile on each feeder 1 and 2. The level measurement (device 6) of the crusher 3 maintains a suitable level inside the crusher 3. Automation uses the level measurements to create a model of the degree of filling at each point on the length of the feeders 1 and 2 (e.g. at a precision of 0.5 meters). As the feeders 1 and 2 are running the level measurement profile moves correspondingly in the transfer register of the automation.

The discharge feeder 1 is able to push a part of the material pile to an empty crusher feeder 2 at a standstill, within the laws of physics, of course. The material on the discharge feeder 1 stops advancing when counterforce caused by the material already transferred onto the crusher feeder 2 exceeds the push force of the mass still on the discharge feeder 1. The process rates, distances and parameters are specified when the system is taken in use. A discharge feeder 2 speed that is about 2 to 3 times faster than the speed of the crusher feeder enables the gap created during the discharge event to be closed.

The above description of the invention is only intended to illustrate the basic idea of the invention. A person skilled in the art may thus vary its details within the scope of the attached claims.

## Claims

1. A method for feeding material to be crushed (B) by a step feeder into a crusher (3), **characterized by** arranging one immediately after the other two step feeders (1, 2) placed at substantially the same height level or substantially close to the same height level, the use and speed of the feeders being controlled independently in each case.

2. A method as claimed in claim 1, **characterized by** measuring the level of the material to be crushed (B) that is in each step feeder (1, 2) and in the crusher (3), and controlling the use and speed movement of the step feeders (1, 2) and the crusher (3) on the basis of the level data obtained.

3. A method as claimed in claim 2, **characterized in that** the levels are measured at a forward end of each step feeder (1, 2), i.e. at the end where the material to be crushed (B) is received.

4. A method as claimed in claim 2 or 3, **characterized in that** the levels are measured optically.

5. A method as claimed in claim 2 or 3, **characterized in that** the levels are measured by laser scanning.

6. A method as claimed in any one of the preceding claims, **characterized in that** the speed of a first step feeder (1), which receives material to be crushed (B) discharged thereto, is selected to be 2 to 3 times faster than the speed of a second step feeder (2) that feeds the material to be crushed (B) into the crusher (3).

7. A system for feeding material to be crushed (B) by a step feeder into a crusher (3), **characterized in that** it comprises two step feeders (1, 2) arranged one immediately after the other at substantially the same height level or substantially close to the same height level, the feeders and the crusher (3) being provided with means (4, 5, 6) for controlling their use independently in each case.

8. A system as claimed in claim 7, **characterized in that** the means for controlling the use of the step feeders (1, 2) and the crusher (3) comprise level measurement devices (4, 5, 6) for measuring the level of the material to be crushed (B) that is in the step feeders (1, 2) and in the crusher (3).

9. A method as claimed in claim 8, **characterized in that** the level measurement devices (4, 5) are at a forward end of each step feeder (1, 2), i.e. at the end where the material to be crushed (B) is received.

10. A system as claimed in claim 8 or 9, **characterized in that** the level measurement devices (4, 5, 6) are optical devices.

11. A system as claimed in claim 8 or 9, **characterized in that** the level measurement devices (4, 5, 6) are laser scanners.
